# EUROPÄISCHE PATENTSCHRIFT

(11) **EP 2 861 506 B1**
(45) Veröffentlichungstag und Bekanntmachung des Hinweises auf die Patenterteilung: **14.09.2016**
(21) Anmeldenummer: 13730203.0
(22) Anmeldetag: 14.06.2013
(51) Int. Cl.: F16L 33/06, B65D 45/32

(54) **SPANNRINGVERSCHLUSS MIT MINDESTENS EINEM SCHRAUBENSCHLOSS**
CLAMP RING CLOSURE HAVING AT LEAST ONE SCREW LOCK
FERMETURE DE BAGUE DE SERRAGE COMPRENANT AU MOINS UN FERMOIR À VIS

(30) Priorität: 14.06.2012 US 201261659502 P; 14.06.2012 EP 12172060
(43) Veröffentlichungstag der Anmeldung: 22.04.2015
(73) Patentinhaber: BASF Coatings GmbH, 48165 Münster (DE)
(72) Erfinder: BUTKUS, Michael, 48317 Drensteinfurt (DE); KRUSE, Daniel, 48165 Münster (DE); BERG, Ralf, 48165 Münster (DE)
(86) Internationale Anmeldenummer: PCT/EP2013/062417
(87) Internationale Veröffentlichungsnummer: WO 2013/186380

(56) Entgegenhaltungen:
- EP-A1- 1 559 920
- GB-A- 340 869
- US-A- 2 697 570
- US-A1- 2008 116 698

## Beschreibung

Die vorliegende Erfindung betrifft einen Spannringverschluss zum Befestigen von Deckeln an Behältern mit mindestens einem Schraubenschloss nach dem Oberbegriff vom Anspruch 1.

Zum Befestigen von Deckeln an Behältern oder Fässern werden häufig Spannringe verwendet, wodurch eine Vielzahl von Verschraubungen vermieden wird.

Derartige Spannringe haben üblicherweise einen U- oder V-förmigen Querschnitt und sorgen für das Fixieren und Abdichten des Deckels auf einem Fass.

Zur Handhabung sind die offenen Spannringe mit einem oder mehreren Spannschlössern versehen, die die freien Enden der Spannringe miteinander verbinden und diese beim Schließen zusammenziehen bzw. beim Öffnen auseinanderdrücken. Der Spannring kann beim Öffnen auch aufgrund seiner Eigenspannung einen größeren Durchmesser annehmen.

Ein Spannring mit einem Schraubenschloss ist aus der deutschen Offenlegungsschrift DE 197 28 655 A1 bekannt. Ein Spannring der eingangs genannten Art wird von der Firma UCON AG Containersysteme KG unter der Bezeichnung "Spannring DN 457" vertrieben.

Zum leichten und schnellen Öffnen oder Schließen des Spannringverschlusses wird häufig ein elektrisch oder pneumatisch angetriebener Schraubendreher benutzt, z.B. ein Akkuschrauber. Beim Öffnen des Spannringverschlusses sollte der Schraubvorgang abgebrochen werden, bevor der Gewindering den Lagerbock berührt. Wenn dies nicht gelingt, schlägt häufig der am Ende der Schraube angeordnete Gewindering gegen den das Innengewinde aufweisenden Lagerbock. Hierbei erhält der Spannringverschluss einen Impuls, durch den er unkontrollierbar hochgeschleudert wird. Hieraus ergibt sich die Gefahr von Verletzungen umstehender Personen oder von Sachbeschädigungen.

Es ist Aufgabe der vorliegenden Erfindung, diesen Nachteil des Standes der Technik zu vermeiden und einen Spannringverschluss anzugeben, bei dem nicht die Gefahr besteht, dass er beim Öffnen mithilfe eines motorisch angetriebenen Schraubendrehers am Ende des Öffnungsvorganges geschleudert wird.

Überraschenderweise wurde gefunden, dass diese Aufgabe dadurch gelöst werden kann, dass die Schraube in der Endstellung des Öffnungsvorganges im Bereich des mit einem Innengewinde versehenen Lagerbocks kein Gewinde aufweist, das in das Innengewinde eingreift. Die Schraube kann in diesem Bereich als glatter Schaft ausgebildet sein und sie kann auch in irgendeiner Weise profiliert sein, entscheidend ist nur, dass in der vollständig geöffneten Stellung des Spannringverschlusses kein Eingriff der Schraube in das Innengewinde des Lagerbocks möglich ist.

Gegenstand der vorliegenden Erfindung ist daher ein Spannringverschluss der eingangs genannten Art, bei dem die Schraube an ihrem zum Schraubenkopf entgegen gesetzten Ende einen auf der dem Schraubenkopf zugewandten Seite des Gewinderings angeordneten und an den Gewindering angrenzenden Abschnitt aufweist, der kein in das Innengewinde des zweiten Lagerbocks eingreifendes Gewinde trägt und sich mindestens über die Breite des zweiten Lagerbocks erstreckt.

Der Gewindering ist nahe dem Ende der Schraube auf dem Schaft derselben fixiert. Diese Fixierung kann beispielsweise durch Verklebung oder eine Verschweißung erreicht werden. Besonders vorteilhaft im Hinblick auf eine leichte Demontage ist der Gewindering durch einen Gewindestift auf dem Schaft der Schraube fixiert.

Die Ausbildung des Schraubenkopfes ist für die Funktion der vorliegenden Erfindung nicht kritisch. Es kann sich um übliche Schraubenköpfe handeln, die mittels eines Schraubendrehers gedreht werden können. Der Kopf der Schraube kann daher als Außen- oder Innenmehrfachkant, als Schlitzkopf, als Kreuzschlitzkopf oder als Innensechsrundkopf ausgebildet sein. Innensechsrundkopfschrauben sind auch als sogenannte Torx®-Schrauben bekannt.

Vorteilhaft ist der Kopf der Schraube als Außen- oder Innensechskant ausgebildet.

Der Spannringverschluss oder Teile hiervon können aus unterschiedlichen Materialien einschließlich Kunststoffen bestehen. Vorteilhaft besteht der Verschluss jedoch aus Metall, da hierdurch eine besondere Stabilität und Haltbarkeit erreicht wird.

Üblicherweise haben Spannringverschlüsse nur ein Schraubenschloss. Um ein besonders weites Öffnen zu erzielen, kann der Spannringverschluss mehrere über seinen Umfang verteilte Schraubenschlösser aufweisen, beispielsweise zwei oder drei Schraubenschlösser.

Im folgendem wird ein Ausführungsbeispiel der Erfindung anhand der Zeichnung näher erläutert. Es zeigen:

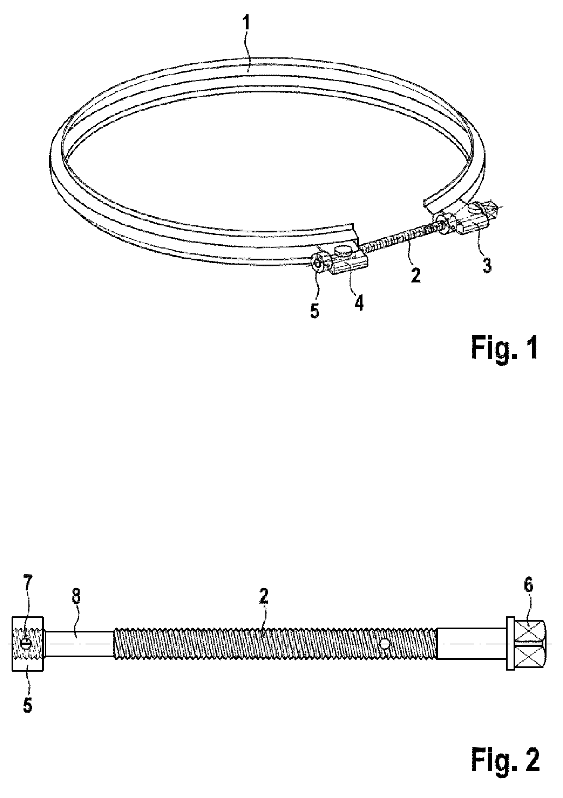

- Figur 1: eine perspektivische Darstellung des Spannringverschlusses
und
- Figur 2: eine Detailansicht der Schraube.

Der Spanringverschluss weist einen Spannring (1) mit einem U-förmigen Querschnitt auf. An den Enden des offenen Spannrings sind Lagerböcke (3) und (4) angeordnet. Der Lagerbock (3) weist ein Durchgangloch und der Lagerbock (4) ein Innengewinde auf. Eine Schraube (2) erstreckt sich durch das Durchgangsloch des Lagerbocks (3) und greift in das Innengewinde des Lagerbocks (4) ein. Das Ende der Schraube (2) ragt aus dem Lagerbock (4) heraus. Auf diesem Teil des Schraubenschaftes ist ein Gewindering (5) mittels eines Gewindestifts (7) fixiert. Der Schaft der Schraube (2) weist angrenzend an den Gewindering (5) einen Abschnitt (8) auf, der kein Gewinde trägt.

Aufgrund des gewindefreien Abschnitts (8) kann der Spannringverschluss gefahrlos mithilfe eines motorisch angetriebenen Schraubendrehers geöffnet werden. Selbst wenn der Gewindering (5) beim Öffnen gegen den Lagerbock (4) schlägt, erhält der Schraubringverschluss aufgrund des fehlenden Eingriffs des glatten Schraubenschaftes in das Innengewinde des Lagerbocks keinen Impuls. Er wird daher nicht hochgeschleudert und es besteht keine Gefahr von Verletzungen oder Sachbeschädigungen.

### Bezugszeichenliste

- (1): Spannring
- (2): Schraube
- (3): Lagerbock
- (4): Lagerbock
- (5): Gewindering
- (6): Schraubenkopf
- (7): Gewindestift
- (8): Abschnitt

## Patentansprüche

1. Spannringverschluss zum Befestigen von Deckeln an Behältern mit mindestens einem Schraubenschloss, umfassend
- einen offenen Spannrings (1) mit einem U- oder V-förmigen Querschnitt,
- an den Enden des Spannrings (1) angeordnete Lagerblöcke (3, 4), von denen der eine ein Durchgangsloch und der andere ein Innengewinde aufweist,
- eine chraube (2), die sich durch das Durchgangsloch des ersten Lagerbocks (3) erstreckt und mit ihrem Gewinde in das Innengewinde des zweiten Lagerbocks (4) eingreift, wobei die Schraube (2) sich über die Breite dieses zweiten Lagerbocks (4) hinaus erstreckt und auf dem aus dem zweiten Lagerbock (4) heraustretenden Abschnitt einen diesen umschließenden, fixierten Gewindering (5) trägt,
**dadurch gekennzeichnet, dass**
die Schraube (2) an ihrem zum Schraubenkopf (6) entgegen gesetzten Ende einen auf der dem Schraubenkopf (6) zugewandten Seite des Gewinderings (5) angeordneten und an den Gewindering (5) angrenzenden Abschnitt (8) aufweist, der kein in das Innengewinde des zweiten Lagerbocks (4) eingreifendes Gewinde trägt und sich mindestens über die Breite des zweiten Lagerbocks (4) erstreckt.

2. Spannringverschluss nach Anspruch 1, **dadurch gekennzeichnet, dass** der Gewindering (5) durch einen Gewindestift (7) auf dem Schaft der Schraube (2) fixiert ist.

3. Spannring nach Anspruch 1 oder 2, **dadurch gekennzeichnet, dass** der Kopf (6) der Schraube (2) als Außen- oder Innenmehrfachkant, als Schlitzkopf, als Kreuzschlitzkopf oder als Innensechsrundkopf ausgebildet ist.

4. Spannringverschluss nach Anspruch 3, **dadurch gekennzeichnet, dass** der Kopf (6) der Schraube (2) als Außen- oder Innensechskant ausgebildet ist.

5. Spannringverschluss nach Anspruch 1-4, **dadurch gekennzeichnet, dass** er aus Metall besteht.

6. Spannringverschluss nach Anspruch 1-5, **dadurch gekennzeichnet, dass** er mehrere über seinen Umfang verteilte Schraubenschlösser aufweist.

## Claims

1. Locking-ring closure for fastening lids on containers, having at least one screw lock and comprising
- an open locking ring (1) having a U- or V-shaped cross section,
- bearing blocks (3, 4) arranged at the ends of the locking ring (1), one of which bearing blocks has a through-passage hole and the other an internal thread,
- a screw (2) which extends through the through-passage hole in the first bearing block (3) and engages by way of its thread in the internal thread of the second bearing block (4), wherein the screw (2) extends beyond the width of this second bearing block (4) and, on the portion that emerges from the second bearing block (4), carries a fixed threaded ring (5) enclosing said portion,
**characterized in that**
the screw (2) has, at its end opposite the screw head (6), a portion (8) adjacent to the threaded ring (5) and arranged on that side of the threaded ring (5) that faces the screw head (6), which portion (8) carries no thread engaging in the internal thread of the second bearing block (4) and extends at least over the width of the second bearing block (4).

2. Locking-ring closure according to Claim 1, **characterized in that** the threaded ring (5) is fixed to the shank of the screw (2) by a threaded pin (7).

3. Locking-ring closure according to Claim 1 or 2, **characterized in that** the head (6) of the screw (2) is in the form of an external or internal polygonal, of a slot head, of a cross slot head or of a hexalobular socket head.

4. Locking-ring closure according to Claim 3, **characterized in that** the head (6) of the screw (2) is in the form of an external or internal hexagon.

5. Locking-ring closure according to Claims 1-4, **characterized in that** it consists of metal.

6. Locking-ring closure according to Claims 1-5, **characterized in that** it has a plurality of screw locks distributed around its circumference.

## Revendications

1. Fermeture de bague de serrage pour la fixation de couvercles à des récipients comprenant au moins une serrure à vis, comprenant :
- une bague de serrage ouverte (1) de section transversale en forme de U ou de V,
- des blocs paliers (3, 4) disposés aux extrémités de la bague de serrage (1), dont l'un présente un trou traversant et l'autre un filetage interne,
- une vis (2) qui s'étend à travers le trou traversant du premier palier (3) et qui s'engage avec son filetage dans le filetage interne du deuxième palier (4), la vis (2) s'étendant au-delà de la largeur de ce deuxième palier (4) et portant, sur la portion sortant du deuxième palier (4), une bague filetée (5) fixe entourant celui-ci,
**caractérisée en ce que**
la vis (2) présente, au niveau de son extrémité opposée à la tête de vis (6), une portion (8) disposée du côté de la bague filetée (5) tourné vers la tête de vis (6) et adjacente à la bague filetée (5), qui ne présente aucun filetage s'engageant dans le filetage interne du deuxième palier (4) et qui s'étend au moins sur la largeur du deuxième palier (4).

2. Fermeture de bague de serrage selon la revendication 1, **caractérisée en ce que** la bague filetée (5) est fixée par une goupille filetée (7) sur la tige de la vis (2).

3. Bague de serrage selon la revendication 1 ou 2, **caractérisée en ce que** la tête (6) de la vis (2) est réalisée sous forme de profilé à plusieurs pans extérieurs ou intérieurs, sous forme de vis fendue, sous forme de tête à fente cruciforme ou sous forme de tête ronde à six pans intérieurs.

4. Fermeture de bague de serrage selon la revendication 3, **caractérisée en ce que** la tête (6) de la vis (2) est réalisée sous forme de profilé à six pans extérieurs ou intérieurs.

5. Fermeture de bague de serrage selon les revendications 1 à 4, **caractérisée en ce qu'**elle se compose de métal.

6. Fermeture de bague de serrage selon les revendications 1 à 5, **caractérisée en ce qu'**elle présente plusieurs serrures à vis réparties sur sa périphérie.
